# EUROPEAN PATENT APPLICATION

(11) **EP 1 956 267 A2**
(43) Date of publication of application: **13.08.2008**
(21) Application number: 08000211.6
(22) Date of filing: 08.01.2008
(51) Int. Cl.: F16G 13/04, B65G 17/40

(54) **Silent chain, particularly for conveyors**

(30) Priority: 12.02.2007 IT MI20070251
(71) Applicant: Fond Metalli Conveyors S.r.l., 23804 Monte Marenzo (LC) (IT)
(72) Inventor: Teso, Paolo, 22070 Capiago Intimiano (COMO) (IT)
(74) Representative: Petruzziello, Aldo

(57) **Abstract**

A silent chain is described, particularly for conveyors, comprising a plurality of links (1A, 1B) connected to each other. Each link comprises two pins (2) connected to each other by a plurality of plates (100) between which are intercalated link plates (100') connected to a pin of a link (1A) and to a pin of the adjacent link (1B), and two end plates (3) provided with two holes (32, 32', 32") for the passage of said pins (2). The end plate (3) comprises a countersunk seat (33) formed around each hole (32, 32', 32") and the pin (2) comprises a tapered end (20) which is accommodated in the countersunk seat (33) of the end plate (3), so as not to protrude outward from the end plate (3) and to maximise the contact surface.

## Description

The present invention refers to a silent chain particularly for conveyors.

A silent chain for conveyors of the conventional type is made up of a plurality of links. Each link comprises two pins, parallel to each other, connected by a plurality of plates.

The plates belonging to one link are intercalated with the plates belonging to the adjacent links. The plates carried by each pin are held in place by riveting the two ends of the pin on the end plates.

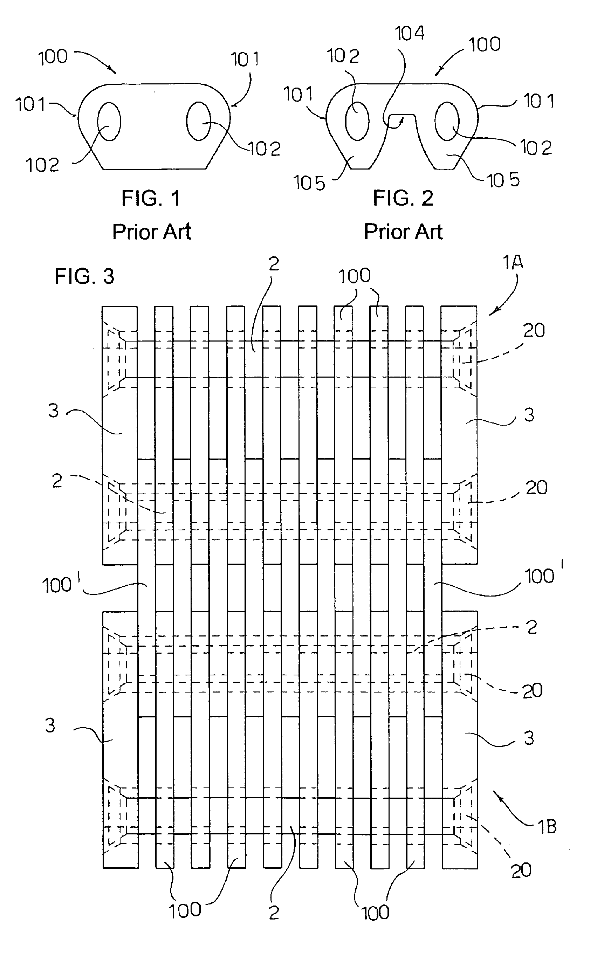

Figures 1 and 2 show two types of plates of a conventional silent chain, denoted with the reference numeral 100. The plates 100 of Figures 1 and 2 have a substantially trapezoid shape, wherein the corners 101 of the longer base of the trapezium are rounded. Two elliptical holes 102 adapted to receive respective pins with an elliptical section are formed in each plate 100.

The plate 100 of Figure 1 is solid and serves as a guide. The plate 100 of Figure 2 has a cut-out 104 in the centre, which forms two lobes 105 adapted to engage with the teeth of a drive wheel (not shown) of the silent chain.

Conventional silent chains have the serious drawback that the riveted end parts of the pins protrude (or can protrude) with respect to the end plate and can therefore interfere with the fixed parts of the conveyor to which the chain belongs. This leads to (or can lead to) both a possible jamming of the silent chain and a reduction in the useful life of said chain, since the riveted ends of the pins, by knocking and/or rubbing against the fixed walls of the conveyor, tend to come out and/or to become worn, thus no longer being able to hold the plates carried by the pin in place.

On latest generation chains, thanks to the known riveting technologies, the riveted ends of the pins have a very small riveting thickness. Furthermore, the end plates have a pouch-type housing seat in which the riveted part of the pin is housed, so as not to protrude outward from the end plate.

However, said riveted part of the pin, having a very small thickness, is extremely fragile. Therefore, during the operation and the fatigue stress of the chain, the riveted part of the pin tends to wear down, because of the continuous hammering of its pouch-type housing seat. This wear causes the riveted part of the pin to break, compromising the life of the chain. In fact the chain comes off because the end plate is no longer retained by the pin.

Object of the present invention is to overcome the above mentioned limits and/or drawbacks presented by the silent chains of the prior art, by producing a silent chain that is reliable and that ensures a long average life.

Another object of the present invention is to provide such a silent chain that is cheap and simple to produce and to mount.

These objects are achieved by means of a silent chain realised according to the present invention, which has the characterising features illustrated in appended independent claim 1.

Further advantageous characteristics of the invention form the subject matter of the dependent claims.

The silent chain, particularly for conveyors, according to the invention comprises a plurality of links connected to one another. Each link comprises two pins connected to each other by a plurality of plates between which are intercalated link plates connected to a pin of one link and to a pin of the adjacent link. Two end plates are disposed at the ends of each link.

Each end plate is provided with two holes for the passage of said pins.

The end plate further comprises a countersunk seat formed around each hole. The pin has a tapered end, which is housed in the countersunk seat of the end plate, so that the tapered end of the pin does not protrude outwards from the end plate.

Furthermore the contact surface between the end of the pin and the countersunk seat of the plate is maximised, with the result of a greater distribution of the pressures and of a larger working surface. Consequently, the wear is evenly distributed over the whole surface of the plate and of the pin.

This configuration ensures an effect of much longer duration compared with the silent chains of the prior art. Therefore, the silent chain according to the invention offers a greater reliability and strength than the silent chains and the conveyors of the prior art.

Further characteristics of the invention will be made clearer by the detailed description that follows, referring to purely exemplifying and therefore non-limiting embodiment thereof, illustrated in the appended drawings, wherein:
Figures 1 and 2 are plan views showing diagrammatically two types of plates of a silent chain according to the prior art;
Figure 3 is a side view illustrating diagrammatically a portion of a silent chain according to the invention;
Figure 4 is a perspective view of a first embodiment of an end plate of the silent chain according to the invention illustrated in Figure 3;
Figure 5 is a plan view of the end plate of Figure 4;
Figure 6 is a cross-sectional view taken along the plane of section VI-VI of Figure 5;
Figure 7 is a perspective view illustrating a pin, partially broken off, forming part of the silent chain according to the invention of Figure 3;
Figure 8 is a side view of a portion of the length of silent chain according to the invention of figure 3, partially sectioned at the end of the pin;
Figure 9 is a plan view of a variant of the first embodiment of the end plate according to the invention;
Figures 10 and 11 are perspective and plan views, respectively, of a second embodiment of an end plate according to the invention;
Figure 12 is a plan view of a variant of the second embodiment of the end plate according to the invention;
Figures 13 and 14 are perspective and plan views, respectively, of a third embodiment of an end plate according to the invention; and
Figure 15 is a plan view of a variant of the third embodiment of the end plate according to the invention.

The silent chain according to the invention will be described with the aid of the figures.

Figure 3 shows a length of silent chain comprising two chain links 1A and 1B. Each chain-link 1A and 1B comprises two pins 2 connected to each other by plates 100, per se known, like those illustrated in Figures 1 and 2. Between the plates 100 of each link 1A and 1B are intercalated link plates 100' which connect a shaft 2 of the first link 1A with a shaft 2 of the second link at 1B.

Each link 1A and 1B has respective end plates 3 in which the ends of the pins 2 are blocked.

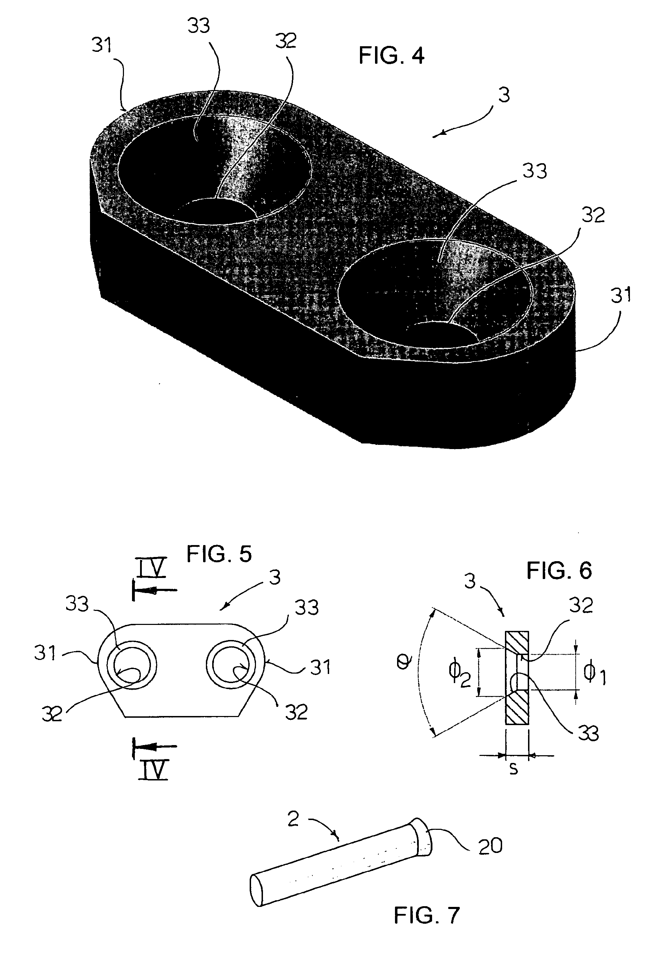

A first embodiment of an end plate 3 according to the invention is described with reference to figures 4, 5 and 6.

The end plate 3 has essentially the same shape as the plate 100 of Figure 1. That is, the end plate 3 has a trapezoid shape with the corners 31 of the greater base rounded.

The difference with respect to the plates of the prior art is represented by the fact that the end plate 3 has two holes 32 surrounded by a countersunk circular seat 33 and has double the thickness of the plates 100. By way of example, in figures 4-6 a round hole 32 has been illustrated. However, the hole 32 can have another shape as will be described hereunder.

As shown in figure 6, by way of example, the plate 3 has a thickness s of about 3.00 mm, in which half the thickness of the plate is occupied by the hole 32 and the other half of the thickness of the plate is occupied by the countersunk seat 33. The round hole 33 has a diameter φ1 of about 4.75 mm. The countersunk seat 33 has a maximum diameter φ2 of about 6.00 mm and a countersink angle between 50° and 70°, preferably 60°.

Figure 7 shows diagrammatically the end portion of the pin 2 belonging to a silent chain produced according to the invention. The pin 2 has an elliptical cross-section. In this manner, the pin 2 can couple inside the elliptical holes in the intermediate links 100, 100'. However, the pin 2 differs from the conventional pins in that it has a circular tapered or truncated conical portion 20 at each end, adapted to be accommodated in the countersunk seat 33 of the end plate 3.

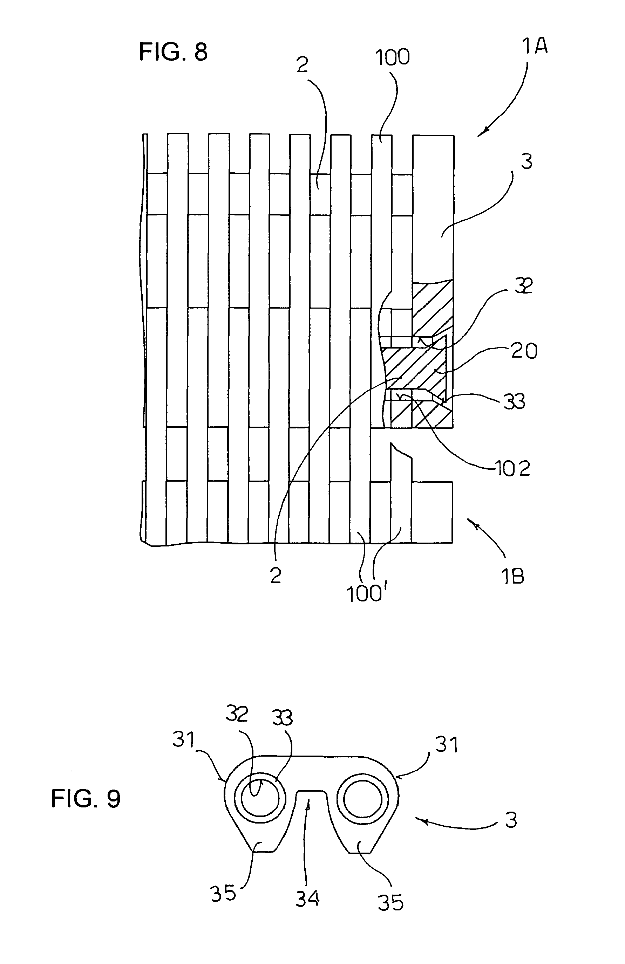

As shown in figure 8, the pin 2 is inserted in the holes 102 of the intermediate plates 100 and 100' and the tapered end 20 of the pin is housed in the countersunk seat 33 of the end plate 3.

The tapered circular portion 20 of the pin 2 can be obtained by riveting or can be applied to the pin 2 by welding. The thickness of the tapered end 20 of the pin is equal to s/2, that is, to half the thickness of the end plate 3, and the angle of inclination of the tapered portion 20 of the pin is equal to the countersink angle θ of the countersunk seat 33.

In this manner, the end 20 of the pin 2 does not protrude from the end plate 3 and at the same time the contact surface between the tapered end 20 of the pin and the countersunk seat 33 of the end plate 1 is maximised. Thus, the resistance to wear of the end part 20 of the pin 3 is also improved.

Like or similar parts to those already described are denoted hereunder with the same reference numerals and are not described in detail.

Figure 9 shows a variant of the end plate 3 according to the first embodiment of the invention. In said variant, a cut-out 34 is provided in the end plate 3 so as to form two lobes 35 adapted to engage with the teeth of a drive wheel of the conveyor.

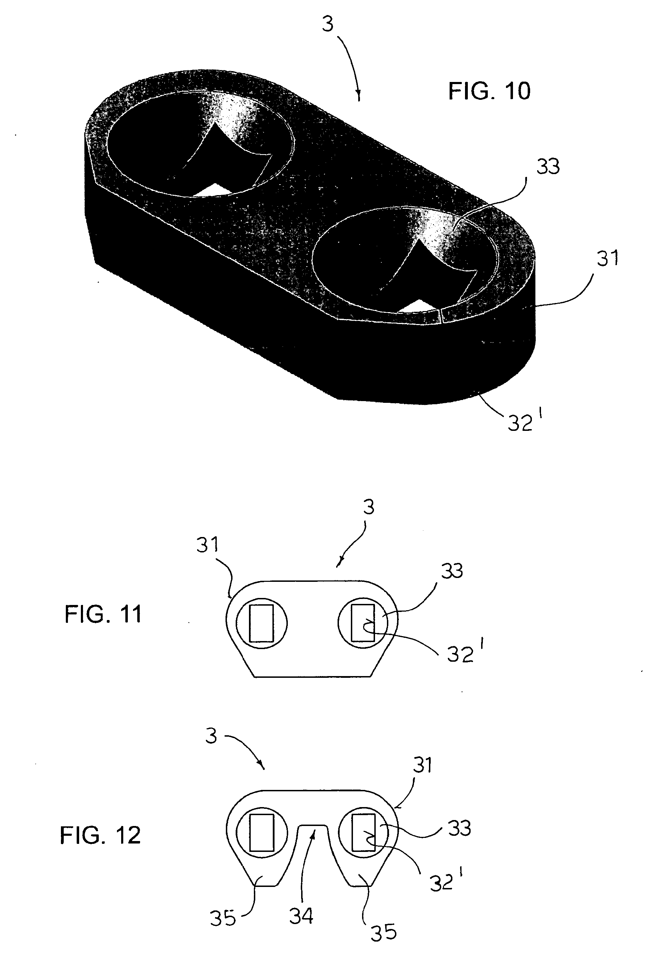

Figures 10 and 11 show a second embodiment of the end plate 3, in which rectangular holes 32', again surrounded by countersunk circular seats 33, are provided.

Figure 12 shows a variant of the end plate 3 according to the second embodiment, in which a cut-out 34 is provided so as to form two lobes 35 adapted to engage with the teeth of a drive wheel of the conveyor.

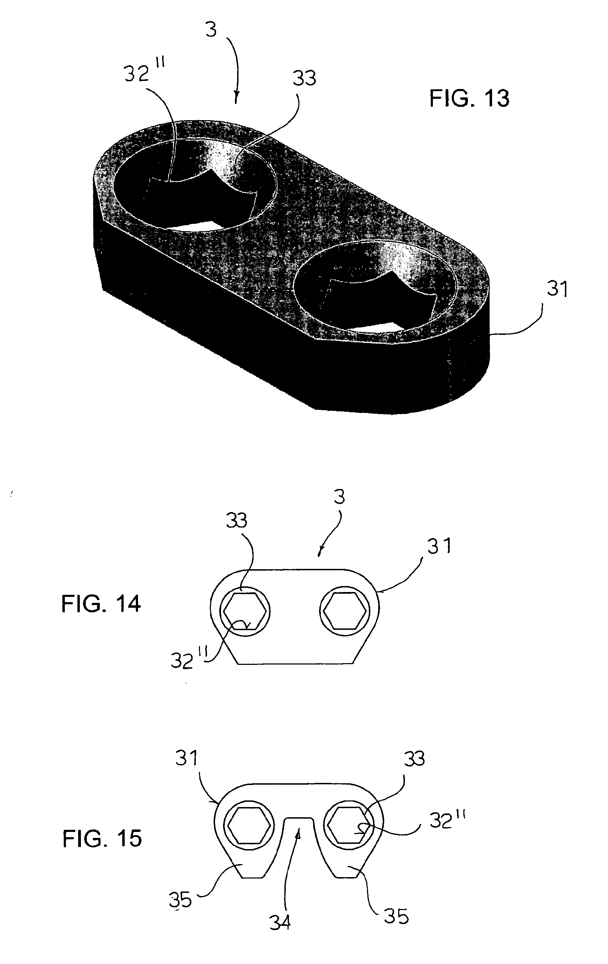

Figures 13 and 14 show a third embodiment of the end plate 3, in which hexagonal holes 32", again surrounded by countersunk circular seats 33, are provided.

Figure 15 shows a variant of the end plate 3 according to the third embodiment, in which a cut-out 34 is provided so as to form two lobes 35 adapted to engage with the teeth of a drive wheel of the conveyor.

The circular 32, rectangular 32' and hexagonal holes 32" provided in the end plates 3 have a greater diameter or width than the maximum diameter of the pin 2, so that the pin 2 can be inserted into said holes 32, 32' and 32" and thus the end 20 of the pin 2 can be riveted in the circular countersunk seat 33.

The fact of providing for the holes 32, 32' and 32" of the end plate 3 not to have an elliptical shape like the pin 2 allows a certain slack to be ensured between the pin 2 and the walls of the hole of the end plate.

Numerous changes and modifications of detail within the reach of a person skilled in the art can be made to the present embodiments of the invention without thereby departing from the scope of the invention as set forth in the appended claims.

## Claims

1. A silent chain, in particular for a conveyor, comprising a plurality of links (1A, 1B) connected to each other, wherein each link comprises:
- two pins (2) connected to each other by a plurality of plates (100) between which are intercalated link plates (100') connected to a pin of a link (1A) and to a pin of the adjacent link (1B), and
- two end plates (3) provided with two holes (32, 32', 32") for the passage of said pins (2),
**characterised in that**
- each end plate (3) comprises a countersunk seat (33) formed around each hole (32, 32', 32"), and
- each pin (2) comprises a tapered end (20) which is accommodated in said countersunk seat (33) of the end plate (3), so as not to protrude outward from the end plate (3) and to maximise the contact surface between the end (20) of the pin (2) and the countersunk seat (33) of the end plate (3).

2. A silent chain according to claim 2, **characterised in that** said countersunk seat (33) of the end plate (3) has a circular shape and said tapered end (20) of the pin (2) has a truncated conical shape.

3. A silent chain according to claim 2, **characterised in that** said countersunk seat (33) of the end plate (3) has a countersink angle (θ) between 50° and 70°, preferably 60°.

4. A silent chain according to any one of the preceding claims, **characterised in that** said tapered end (20) of the pin (2) is riveted into said countersunk seat (33) in the end plate (3).

5. A silent chain according to any one of claims 1 to 3, **characterised in that** said tapered end (20) of the pin (2) is welded to the pin (2) and accommodated in said countersunk seat (33) of the end plate (3).

6. A silent chain according to any one of the preceding claims, **characterised in that** said pin (2) has a substantially elliptical cross-section and said holes (32, 32', 32") of the end plate (3) have a not elliptical shape adapted to allow the passage of the pin (2) with a certain slack.

7. A silent chain according to claim 6, **characterised in that** said holes (32, 32', 32") in the end plate (3) have a circular, rectangular or hexagonal shape.

8. A silent chain according to any one of the preceding claims, **characterised in that** said end plates (3) have a thickness (s) about double the thickness of the intermediate and link plates (100, 100').

9. A silent chain according to any one of the preceding claims, **characterised in that** half of the thickness (s/2) of the end plate (3) is taken up by said hole (32, 32', 32") and the other half of the thickness (s/2) of the end plate (3) is taken up by said countersunk seat (33).

10. A silent chain according to any one of the preceding claims, **characterised in that** said end plate (3) has a thickness (s) of 3.00 mm, said hole (32) has a diameter (φ1) of about 4.75 mm and said countersink (33) has a maximum diameter (φ2) of about 6.00 mm.
